# EUROPEAN PATENT APPLICATION

(11) **EP 4 826 353 A1**
(43) Date of publication of application: **21.10.2026**
(21) Application number: 24942330.2
(22) Date of filing: 16.08.2024
(51) Int. Cl.: G01N 11/00

(54) **HIGH-TEMPERATURE MOLTEN-SALT VISCOSITY MEASUREMENT DEVICE AND HIGH-TEMPERATURE MOLTEN-SALT VISCOSITY MEASUREMENT METHOD**

(30) Priority: 04.06.2024 CN 202410718246
(71) Applicant: National Institute of Guangdong Advanced Energy Storage Co., Ltd., Guangzhou, Guangdong 510080 (CN)
(72) Inventor: WU, Wei, Guangzhou, Guangdong 510080 (CN); YANG, Yi, Guangzhou, Guangdong 510080 (CN); HUANG, Zheng, Guangzhou, Guangdong 510080 (CN); SHI, Zhengjun, Guangzhou, Guangdong 510080 (CN); HUANG, Gancai, Guangzhou, Guangdong 510080 (CN); XU, Juntao, Guangzhou, Guangdong 510080 (CN); WEN, Zheran, Guangzhou, Guangdong 510080 (CN); LIU, Shi, Guangzhou, Guangdong 510080 (CN)
(74) Representative: Zacco Sweden AB
(86) International application number: PCT/CN2024/112575
(87) International publication number: WO 2025/251423

(57) **Abstract**

The present application relates to a high-temperature molten-salt viscosity measurement device and measurement method. The high-temperature molten-salt viscosity measurement device comprises a container, a first electrode plate, a second electrode plate, a heating element, and a rotating assembly, wherein the container is configured to add molten salt; the first electrode plate and the second electrode plate are configured to connect to an external alternating current, and the first electrode plate and the second electrode plate are capable of being disposed at different heights in the axial direction of the container; the heating element abuts against an outer side wall surface of the container; the heating element is configured to heat the container to a preset temperature; and the container is connected to the rotating assembly, and the rotating assembly can drive the container to rotate relative to the first electrode plate and the second electrode plate in the axial direction. When the device is in use, by means of the observation of the magnitude of the current conducted by the first electrode plate and the second electrode plate and the calculation of the rotational angular acceleration of the high-temperature molten salt, the viscosity of the high-temperature molten salt can be measured, thereby reducing the step of a related sensor coming into contact with the high-temperature molten salt for measurement, and thus avoiding the problem of the sensor being corroded and contaminated.

## Description

### TECHNICAL FIELD

The present application relates to the technical field of viscosity measurement, and in particular to a high-temperature molten-salt viscosity measurement device and a high-temperature molten-salt viscosity measurement method.

### BACKGROUND

Molten salt, as a heat storage material in the steam extraction and heat storage process of power plants, has a significant impact on system energy consumption and heat exchange efficiency due to its viscosity at different temperature states. Therefore, it is essential to accurately measure its viscosity at different temperatures.

In the related art, the viscosity of the molten salt is generally measured by a capillary viscometer, a rotary viscometer, or a vibratory viscometer. A capillary method requires the measurement of the viscosity to rely on the time when a fluid flows out of a container. The rotary viscometer measures the viscosity by placing a rotor in the fluid and measuring a torque during rotation. The vibratory viscometer also requires a sensor to be placed inside the fluid and measure a resistance encountered during vibration so as to calculate the viscosity.

However, a heat loss of the molten salt flowing in a capillary tube is large, causing the molten salt to easily cool and solidify, which makes a measurement result distorted. Due to a high operating temperature of the molten salt and certain corrosiveness to metal materials, contamination of the sensor of the rotary viscometer or the vibratory viscometer becomes an issue.

### SUMMARY

Based on the above, it is necessary to provide a high-temperature molten-salt viscosity measurement device and a high-temperature molten-salt viscosity measurement method in view of the issues of sensor contamination and difficulty in fluid temperature control when a measurement device in the related art performs measurement of viscosity of high-temperature molten salt.

In a first aspect, the present application provides a high-temperature molten-salt viscosity measurement device. The high-temperature molten-salt viscosity measurement device includes:
a container, configured to add molten salt;
a first electrode plate and a second electrode plate, wherein the first electrode plate and the second electrode plate are configured to connect to an external alternating current, and the first electrode plate and the second electrode plate are symmetrically distributed around an axis of the container, and the first electrode plate and the second electrode plate are capable of being disposed at different heights in an axial direction of the container;
a heating element, abutting against an outer side wall surface of the container and configured to heat the container to a preset temperature; and
a rotating assembly, the container being connected to the rotating assembly, and the rotating assembly being configured to drive the container to rotate about the axis relative to the first electrode plate and the second electrode plate.

When the high-temperature molten-salt viscosity measurement device is in use, by means of the observation of the magnitude of the current conducted by the first electrode plate and the second electrode plate and the calculation of the rotational angular acceleration of the high-temperature molten salt, the viscosity of the high-temperature molten salt can be measured, so that the electrical conductivity of the high-temperature molten salt can be fully exerted. The measurement method is simple and reliable, and the measurement efficiency is high. In addition, since the high-temperature molten salt is placed in the container when the high-temperature molten-salt viscosity measurement device is in use, the temperature of the molten salt is uniform, and steps of relevant sensors coming into contact with the high-temperature molten salt for measurement are reduced, so that the issue of sensor corrosion and sensor contamination caused by the high-temperature molten salt is avoided. Further, by heating the container using the heating element, the temperature of the high-temperature molten salt can be ensured to maintain at a stable level during the measurement process, thereby helping to reduce heat loss and improve the measurement accuracy of the high-temperature molten-salt viscosity measurement device.

In an embodiment, the high-temperature molten-salt viscosity measurement device further includes a thermal insulation component, and the thermal insulation component surrounds the outer side wall surface of the container.

In an embodiment, the high-temperature molten-salt viscosity measurement device further includes an upper cover, the container has a liquid injection port, and the upper cover is configured to cover and close the liquid injection port.

In an embodiment, the high-temperature molten-salt viscosity measurement device further includes a temperature sensing component, and the temperature sensing component abuts against the outer side wall surface of the container, and the temperature sensing component is configured to measure the temperature of the container.

In an embodiment, the high-temperature molten-salt viscosity measurement device further includes a first lifting arm and a second lifting arm, the first lifting arm is connected to the first electrode plate, the second lifting arm is connected to the second electrode plate, and the first lifting arm and the second lifting arm respectively drive the first electrode plate and the second electrode plate to move in the axial direction of the container.

In an embodiment, the rotating assembly includes a rotating motor and a clamp, the clamp is fixedly connected to the rotating motor, the container is clamped in the clamp, and the rotating motor is configured to drive the clamp to rotate, so that the clamp drives the container to rotate about the axis.

In an embodiment, the container is in a cylindrical shape and is made of a high-temperature resistant thermally conductive material.

In an embodiment, the heating element is a heating wire, and the heating wire is wound around the outer side wall surface of the container around the axis of the container.

In another aspect, the present application provides a high-temperature molten-salt viscosity measurement method, performed with the above-mentioned high-temperature molten-salt viscosity measurement device for measurement, including the following steps:
S1: adding a preset volume of molten salt into the container;
S2: adjusting positions of the first electrode plate and the second electrode plate in the axial direction of the container, so that lower edges of the first electrode plate and the second electrode plate are both flush with a liquid level of the molten salt;
S3: activating the heating element to heat the container to a preset temperature;
S4: connecting the first electrode plate and the second electrode plate, and recording an initial electric current value;
S5: activating the rotating assembly to allow the rotating assembly to rotate in a preset rotational angular velocity; and
S6: recording a time interval required for the electric current to change from the initial value to a stable value after a magnitude of the electric current in a circuit between the first electrode plate and the second electrode plate stabilizes.

In the above-mentioned high-temperature molten-salt viscosity measurement method, viscosity measurement needs to be performed on the high-temperature molten salt with an unknown viscosity under the conditions of the preset volume, the preset temperature, and the preset angular velocity, so that after the time interval required for the electric current to change from the initial electric current value to the stable electric current value is obtained, the rotational angular acceleration of the high-temperature molten salt to rotate stably from a stationary state to the preset angular velocity can be further calculated. Correspondingly, the viscosity of the high-temperature molten salt can be obtained according to a relationship that "the viscosity of the fluid is inversely correlated with the rotational angular acceleration of the fluid in the container". Through the above-mentioned high-temperature molten-salt viscosity measurement method, the viscosity measurement of the high-temperature molten salt can be implemented by observing the magnitude of the current conducted by the first electrode plate and the second electrode plate and calculating the rotational angular acceleration of the high-temperature molten salt, so that the electrical conductivity of the high-temperature molten salt can be fully exerted. The measurement method is simple and reliable, and the measurement efficiency is high. In addition, when the above-mentioned high-temperature molten-salt viscosity measurement method is applied, since the high-temperature molten salt is placed in the container, the temperature of the molten salt is uniform, and steps of relevant sensors coming into contact with the high-temperature molten salt for measurement are reduced, thereby avoiding the issue of corrosion and contamination of the sensors caused by the high-temperature molten salt. Further, by heating the container using the heating element, the temperature of the high-temperature molten salt can be ensured to maintain at a stable level during the measurement process, thereby helping to reduce heat loss and improve the measurement accuracy.

In an embodiment, after step S6, the method further includes a step of adding a preset volume of a standard fluid having a known viscosity and a known density into the container, and performing step S2 to step S6.

### BRIEF DESCRIPTION OF THE DRAWINGS

FIG. 1 is a structural front view of a high-temperature molten-salt viscosity measurement device according to an embodiment of the present application.
FIG. 2 is a top view of a partial structure of the high-temperature molten-salt viscosity measurement device shown in FIG. 1.
FIG. 3 is a schematic structural view of the high-temperature molten-salt viscosity measurement device according to another embodiment of the present application.
FIG. 4 is a schematic structural view of the high-temperature molten-salt viscosity measurement device according to yet another embodiment of the present application.
FIG. 5 is an electric current output graph of the high-temperature molten-salt viscosity measurement device according to an embodiment of the present application.

Description of Reference Numerals:
10, molten salt; 100, container; 200, first electrode plate; 300, second electrode plate; 200a, alternating current wire; 400, heating element; 500, rotating assembly; 510, rotating motor; 520, clamp; 600, thermal insulation component; 700, upper cover; 800, temperature sensing component; 900, first lifting arm; 1000, second lifting arm.

### DETAILED DESCRIPTION

In order to make the above objects, features and advantages of the present application more comprehensible, specific embodiments of the present application are described in detail below with reference to the drawings. In the following description, many specific details are set forth to make the present application fully understandable. However, the present application can be implemented in many other ways different from those described herein. Similar improvements can be made by those skilled in the art without departing from the spirit of the present application. The present application is not limited to the specific embodiments disclosed below.

In the description of the present application, it should be understood that the terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential" etc. indicate the orientations or positional relationships on the basis of the drawings. These terms are only for the convenience of describing the present application and simplifying the description, rather than indicating or implying that the related devices or element must have the specific orientations, or be constructed or operated in the specific orientations, and therefore cannot be understood as limitations of the present application.

In addition, the terms "first" and "second" are only used for descriptive purposes and cannot be understood as indicating or implying relative importance or implicitly indicating the quantity of the indicated technical features. Therefore, the features modified by "first" or "second" may explicitly or implicitly include at least one of the features. In the description of the present application, the "plurality" means at least two, such as two, three, etc., unless otherwise specifically defined.

In the present application, unless otherwise clearly specified and defined, the terms "installed", "connected", "coupled", "fixed" and the like should be understood broadly. For example, an element, when being referred to as being "installed", "connected", "coupled", or "fixed" to another element, unless otherwise specifically defined, may be fixedly connected, detachably connected, or integrated to the other element, may be mechanical connected or electrically connected to the other element, and may be directly connected to the other element or connected to the other element via an intermediate medium, or may be the internal communication of two elements or the interaction relationship between them. For those skilled in the art, the specific meanings of the above terms in the present application can be understood according to specific circumstances.

In the present application, unless otherwise specifically defined, a first feature, when being referred to as being located "on" or "under" a second feature, may be in direct contact with the second feature or in indirect contact with the second feature via an intermediate medium. Moreover, a first feature, when being referred to as being located "on", "above", "over" a second feature, may be located right above or obliquely above the second feature, or merely located at a horizontal level higher than the second feature. A first feature, when being referred to as being located "under", "below", "beneath" a second feature, may be located right below or obliquely below the second feature, or merely located at a horizontal level lower than the second feature.

It should be noted that an element, when being referred to as being "fixed" or "mounted" to another element, may be directly fixed or mounted to the other element or via an intermediate element. An element, when being referred to as being "connected" to another element, may be directly connected to the other element or via an intermediate element. If present, such terms as "vertical", "horizontal", "up", "down", "left", "right" and the like used herein are for illustrative purposes only and are not meant to be the only ways for implementing the present application.

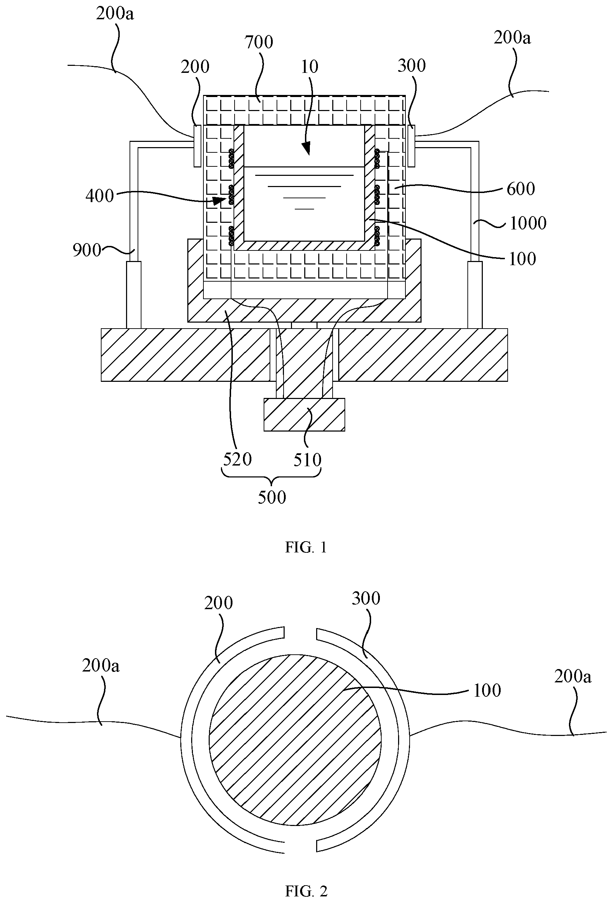

Referring to FIG. 1, FIG. 1 illustrates a structural front view of a high-temperature molten-salt viscosity measurement device according to an embodiment of the present application. The high-temperature molten-salt viscosity measurement device according to the present embodiment of the present application includes a container 100, a first electrode plate 200, a second electrode plate 300, a heating element 400, and a rotating assembly 500. The container 100 is configured to add molten salt 10. The first electrode plate 200 and the second electrode plate 300 are configured to connect to an external alternating current through an alternating current wire 200a, the first electrode plate 200 and the second electrode plate 300 are symmetrically distributed around an axis of the container 100, and the first electrode plate 200 and the second electrode plate 300 are capable of being disposed at different heights in an axial direction of the container 100. The heating element 400 abuts against an outer side wall surface of the container 100. The heating element 400 is configured to heat the container 100 to a preset temperature. The container 100 is connected to the rotating assembly 500, and the rotating assembly 500 can drive the container 100 to rotate about the axis relative to the first electrode plate 200 and the second electrode plate 300. With reference to FIG. 2, the first electrode plate 200 and the second electrode plate 300 are arranged opposite to each other around an outer side wall of the container 100, and the first electrode plate 200 and the second electrode plate 300 are in a non-contact state with the outer side wall of the container 100.

Specifically, since a viscosity of a fluid is inversely correlated with a rotational angular acceleration of the fluid in the container 100, that is, the greater the viscosity of the fluid, the longer the time it takes to rotate from zero to reach a preset angular velocity, reflecting a smaller rotational angular acceleration. Accordingly, this inverse correlation relationship can be used to test rotational angular accelerations of fluids with different and unknown viscosities, and further obtain the corresponding viscosity. The above-mentioned "correspondence relationship between the viscosity of the fluid and the rotational angular acceleration of the fluid in the container 100" can be obtained by performing a calibration test on a fluid having a known viscosity, such as silicone oil and grease, and details are not repeated herein.

Further, the viscosity of the fluid is also affected by changes in fluid density. Therefore, in the above-mentioned calibration test of the fluid having the known viscosity, since a density of the fluid used in the calibration test is inconsistent with a density of the high-temperature molten salt 10 to be tested in the present application, density correction is also required for a calculation process when the viscosity of the high-temperature molten salt 10 is finally calculated, to eliminate the calculation error caused by density factors. Specifically, the density of the high-temperature molten salt 10 to be measured may be measured by a density tester, and this density measurement method is a conventional technical means in the art, which is not described in detail herein.

In the present embodiment, by using the above-mentioned "viscosity of the fluid is inversely correlated with the rotational angular acceleration of the fluid in the container 100", the viscosity of the high-temperature molten salt 10 can also be calculated by rotating the high-temperature molten salt 10 in the container 100. Further, in the present embodiment, since the high-temperature molten salt 10 has electrical conductivity, when the high-temperature molten salt 10 rotates in the container 100, impedances of opposite inner sides of the first electrode plate 200 and the second electrode plate 300 change.

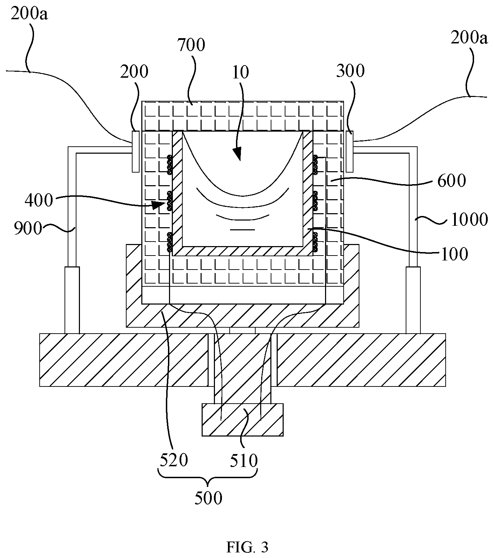

Specifically, with reference to FIG. 3, during the rotation, a liquid level of the high-temperature molten salt 10 gradually rises, presenting a roughly parabolic shape. When the liquid level of the high-temperature molten salt 10 rises, the impedances on the opposite inner sides of the first electrode plate 200 and the second electrode plate 300 decrease, thereby causing the electric current to increase. When the electric current reaches a stable state, that is, it means that an angular velocity of the fluid of the high-temperature molten salt 10 is kept consistent with an angular velocity of the container 100, by simply observing changes in electric current, the time taken for the high-temperature molten salt 10 to accelerate from an initial state (i.e., a stationary state) to the preset angular velocity can be obtained, thereby deducing the rotational angular acceleration. After density correction, the viscosity corresponding to the high-temperature molten salt 10 under the temperature condition can be deduced.

When the high-temperature molten-salt viscosity measurement device is in use, the viscosity measurement of the high-temperature molten salt 10 can be implemented by observing a magnitude of the electric current conducted by the first electrode plate 200 and the second electrode plate 300 and calculating the rotational angular acceleration of the high-temperature molten salt 10, so that the electrical conductivity of the high-temperature molten salt 10 can be fully exerted. The measurement method is simple and reliable, and the measurement efficiency is high. In addition, since the high-temperature molten salt 10 is placed in the container 100 when the high-temperature molten-salt viscosity measurement device is in use, the temperature of the molten salt 10 is uniform, and steps of relevant sensors coming into contact with the high-temperature molten salt 10 for measurement are reduced, the issue of sensor corrosion and sensor contamination caused by the high-temperature molten salt 10 can be avoided. Further, by heating the container 100 through the heating element 400, the temperature of the high-temperature molten salt 10 can be ensured to maintain at a stable level during the measurement process, thereby helping to reduce heat loss and improve the measurement accuracy of the high-temperature molten-salt viscosity measurement device. It should be noted that the above-mentioned solution of the present application can also be applied to any fluid having electrical conductivity, and is not limited to the high-temperature molten salt 10.

With reference to FIG. 1, in some embodiments, the high-temperature molten-salt viscosity measurement device further includes a thermal insulation component 600, and the thermal insulation component is arranged to surround the outer side wall surface of the container 100, so that thermal insulation performance of the high-temperature molten-salt viscosity measurement device can be improved, thereby reducing heat loss during the measurement process, and helping to improve the measurement accuracy. Specifically, the thermal insulation component 600 is made of a low thermal-conductivity material, such as a thermal insulation mortar material, a rubber-plastic thermal insulation material, or an aerogel thermal insulation material.

With reference to FIG. 1, in some embodiments, the high-temperature molten-salt viscosity measurement device further includes an upper cover 700, the container 100 has a liquid injection port, and the upper cover 700 is configured to cover and close the liquid injection port, so that the container 100 can form a closed space, which on one hand helps to prevent the high-temperature molten salt 10 from being thrown out of the container 100 during the rotation, causing contamination, and on the other hand can improve the thermal insulation performance of the container 100, reduce heat loss, and improve the measurement accuracy of the high-temperature molten-salt viscosity measurement device.

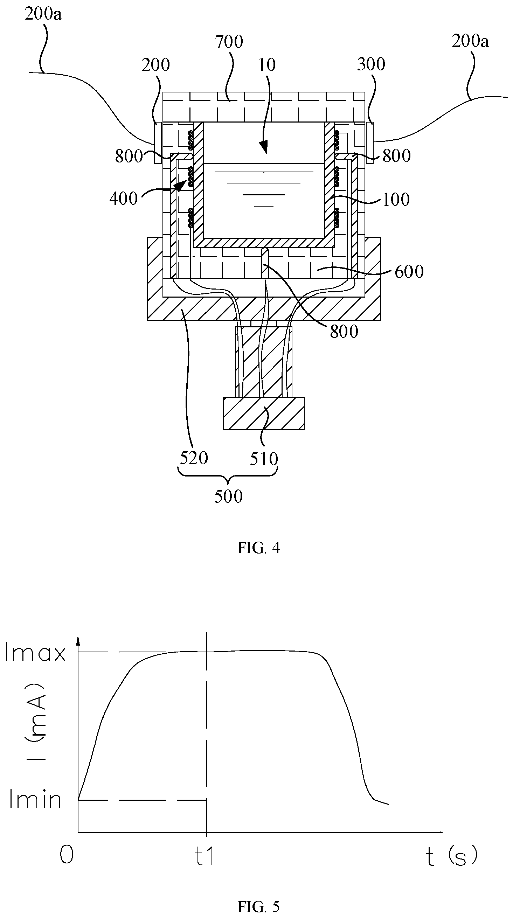

With reference to FIG. 4, in some embodiments, the high-temperature molten-salt viscosity measurement device further includes a temperature sensing component 800. The temperature sensing component 800 abuts against the outer side wall surface of the container 100, and is configured to detect the temperature of the container 100, so that heating power of the heating element 400 can be adjusted in real time according to the temperature change of the container 100, thereby ensuring that the temperature of the high-temperature molten salt 10 can be kept at a stable level during the measurement process, and thus helping to improve the measurement accuracy of the high-temperature molten-salt viscosity measurement device.

Further, with reference to FIG. 4, in some embodiments, at least two temperature sensing components 800 may be arranged, the at least two temperature sensing components 800 are attached to different positions of the container 100 in an abutting manner, and an average temperature of the plurality of temperature sensing components 800 is taken as a result of temperature monitoring, so that a temperature measurement effect of the temperature sensing components 800 can be improved, and accordingly the measurement accuracy of the high-temperature molten-salt viscosity measurement device can be improved. Further, in some embodiments, three temperature sensing components 800 may be arranged, two of the three temperature sensing components 800 symmetrically abut against a side surface of the container 100, and one of the three temperature sensing components 800 abuts against a bottom surface of the container 100, so that the temperature change of the container 100 can be monitored more comprehensively and accurately.

With reference to FIG. 1, in some embodiments, the high-temperature molten-salt viscosity measurement device further includes a first lifting arm 900 and a second lifting arm 1000. The first lifting arm 900 is connected to the first electrode plate 200. The second lifting arm 1000 is connected to the second electrode plate 300. The first lifting arm 900 and the second lifting arm 1000 drive the first electrode plate 200 and the second electrode plate 300 to move in the axial direction of the container 100, so that relative heights between the first electrode plate 200 and the second electrode plate 300 and the liquid level of the high-temperature molten salt 10 in the initial state can be adjusted.

Specifically, the high-temperature molten-salt viscosity measurement device of the present application is configured to measure the electric current change time of the high-temperature molten salt 10 changed from the initial state to a stable rotation state. Therefore, positions of the first electrode plate 200 and the second electrode plate 300 can be adjusted by the first lifting arm 900 and the second lifting arm 1000, respectively, so that lower edges of the first electrode plate 200 and the second electrode plate 300 are both flush with the liquid level of the high-temperature molten salt 10. In this case, an impedance between the first electrode plate 200 and the second electrode plate 300 is the largest, that is, the electric current is at the minimum, which can help to increase the range of electric current change and improve the measurement accuracy. With reference to FIG. 5, the lower edges of the first electrode plate 200 and the second electrode plate 300 are both flush with the liquid level of the high-temperature molten salt 10, thereby increasing a range of the electric current change in a process of changing the electric current from a minimum value to a stable value, thereby improving the accuracy of time t1 required in the process of changing the electric current from the minimum value to the stable value, and in turn improving the accuracy of the calculated rotational angular acceleration of the high-temperature molten salt 10.

It should be understood that in some other embodiments, the positions of the first electrode plate 200 and the second electrode plate 300 may also be adjusted by a manner such as a slide rail and lead screw transmission, and details are not repeated herein.

With reference to FIG. 1, in some embodiments, the rotating assembly 500 includes a rotating motor 510 and a clamp 520. The clamp 520 is fixedly connected to the rotating motor 510, and the container 100 is clamped in the clamp 520, so that the structural stability of the container 100 can be improved. The rotating motor 510 is configured to drive the clamp 520 to rotate, so that the clamp 520 drives the container 100 to rotate about the axis.

In some embodiments, the container 100 is in a cylindrical shape, and is made of a high-temperature resistant thermally conductive material, thereby improving the ease of temperature adjustment and control of the container 100. Preferably, the container 100 is made of a ceramic material, so that the container 100 has excellent mechanical strength and impact resistance. In addition, since the high-temperature molten salt 10 has a certain corrosiveness, the use of the ceramic material can improve the corrosion resistance of the container 100. It should be understood that in other embodiments, the container 100 may also be made of other materials having high thermal conductivity, high corrosion resistance, and high strength, and details are not repeated herein.

In some embodiments, the heating element 400 is a heating wire, and the heating wire is wound around the outer side wall surface of the container 100 around the axis of the container 100. Since the heating wire has characteristics of rapid temperature rise and windability, the heating wire can adapt to the shape of the side wall of the container 100 and improve the heating efficiency of the container 100. It should be understood that in some embodiments, the heating element 400 may be a heating sheet, a heating block, a heating ring, or the like.

The present application also provides a high-temperature molten-salt viscosity measurement method, performed with the above-mentioned high-temperature molten-salt viscosity measurement device for measurement, including the following steps:
S1: Adding a preset volume of molten salt 10 into the container 100;
S2: Adjusting positions of the first electrode plate 200 and the second electrode plate 300 in the axial direction of the container 100, so that lower edges of the first electrode plate 200 and the second electrode plate 300 are both flush with a liquid level of the molten salt 10;
S3: Activating the heating element 400 to heat the container 100 to a preset temperature;
S4: Connecting the first electrode plate 200 and the second electrode plate 300, and recording an initial electric current value;
S5: Activating the rotating assembly 500 to allow the rotating assembly 500 to rotate in a preset rotational angular velocity; and
S6: Recording a time interval required for the electric current to change from the initial value to a stable value after a magnitude of the electric current in a circuit between the first electrode plate 200 and the second electrode plate 300 stabilizes.

In the above-mentioned high-temperature molten-salt viscosity measurement method, viscosity measurement needs to be performed on the high-temperature molten salt 10 with an unknown viscosity under the conditions of the preset volume, the preset temperature, and the preset angular velocity, so that after the time interval required for the electric current to change from the initial value to the stable value is obtained, that is, the time interval required for the high-temperature molten salt 10 to rotate from a stationary state to the preset angular velocity is obtained, the rotational angular acceleration of the high-temperature molten salt 10 to rotate stably from the stationary state to the preset angular velocity can be further calculated. Correspondingly, the viscosity of the high-temperature molten salt 10 can be obtained after density correction according to the relationship that the "viscosity of the fluid is inversely correlated with the rotational angular acceleration of the fluid in the container 100".

Specifically, with reference to FIG. 5, in an embodiment, by outputting a relationship graph of the change of the electric current in the circuit conducted by the first electrode plate 200 and the second electrode plate 300 over time on a related device, the time t1 required for the circuit to change from the initial electric current value to the stable electric current value can be obtained, and then the rotational angular acceleration in this time period t1 can be calculated under the condition that the preset angular velocity and the t1 are known. Then, the viscosity of the high-temperature molten salt 10 can be obtained after density correction according to the relationship that the "viscosity of the fluid is inversely correlated with the rotational angular acceleration of the fluid in the container 100", such as a related relationship table or relationship function.

In addition, through the above-mentioned high-temperature molten-salt viscosity measurement method, the viscosity measurement of the high-temperature molten salt 10 can be implemented by observing the magnitude of the electric current conducted by the first electrode plate 200 and the second electrode plate 300 and calculating the rotational angular acceleration of the high-temperature molten salt 10, so that the electrical conductivity of the high-temperature molten salt 10 can be fully exerted. The measurement method is simple and reliable, and the measurement efficiency is high. In addition, when the above-mentioned high-temperature molten-salt viscosity measurement method is applied, since the high-temperature molten salt 10 is placed in the container 100, the temperature of the molten salt 10 is uniform, and steps of relevant sensors coming into contact with the high-temperature molten salt 10 for measurement are reduced, thereby avoiding the issue of sensor corrosion and sensor contamination caused by the high-temperature molten salt 10. Further, by heating the container 100 through the heating element 400, the temperature of the high-temperature molten salt 10 can be ensured to maintain at a stable level during the measurement process, thereby helping to reduce heat loss and improve the measurement accuracy.

It should be noted that the above-mentioned correspondence relationship between the viscosity of the fluid and the rotational angular acceleration of the fluid in the container 100 can be obtained by performing a calibration test on a fluid having a known viscosity, such as silicone oil and grease.

Specifically, in some embodiments, after step S6, a step of adding a preset volume of a standard fluid having a known viscosity and a known density into the container 100 is further included, and step S2 to step S6 are performed. Adaptively, when the standard fluid is an insulating fluid such as silicone oil or grease, an appropriate amount of electrolyte needs to be added to the insulating fluid, so that the standard fluid has electrical conductivity, thereby adapting to the above-mentioned steps of the present application. In addition, adaptively, that in step S2, the lower edges of the first electrode plate 200 and the second electrode plate 300 are both flush with the liquid level of the molten salt 10 means that, the lower edges of the first electrode plate 200 and the second electrode plate 300 are both flush with the liquid level of the standard fluid. By implementing the above-mentioned steps, the corresponding rotational angular acceleration of the standard fluid at the known viscosity can be obtained under the conditions of the same preset volume, the same preset temperature, and the same preset angular velocity, and then, the viscosity of the high-temperature molten salt 10 at the corresponding rotational angular acceleration can be inversely deduced based on the correspondence relationship between the rotational angular acceleration and the viscosity of the standard fluid. It should be noted that when the viscosity of the high-temperature molten salt 10 at the corresponding rotational angular acceleration is finally inversely deduced, since there is a density difference between the high-temperature molten salt 10 and the standard fluid, density correction also needs to be performed on the calculation process of the high-temperature molten salt 10 to eliminate the calculation error caused by the density factor.

In the present embodiment, this step is a viscosity calibration process of the standard fluid, and is configured to fit a function curve correlating respective times required for rotation to a preset angular velocity with respective viscosities under the conditions of the same preset volume, the same preset temperature, and the same preset angular velocity, as a viscosity calculation standard of the high-temperature molten salt 10. It should be understood that this step can be omitted when the viscosity of the standard fluid at the known volume, the known temperature, and the known angular velocity is known, and the viscosity of the high-temperature molten salt 10 can be directly determined by density correction based on known information.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A high-temperature molten-salt viscosity measurement device, comprising:
a container, configured to add molten salt;
a first electrode plate and a second electrode plate, wherein the first electrode plate and the second electrode plate are configured to connect to an external alternating current, and the first electrode plate and the second electrode plate are symmetrically distributed around an axis of the container, and the first electrode plate and the second electrode plate are capable of being disposed at different heights in an axial direction of the container;
a heating element, abutting against an outer side wall surface of the container and configured to heat the container to a preset temperature; and
a rotating assembly, wherein the container is connected to the rotating assembly, and the rotating assembly is configured to drive the container to rotate about the axis relative to the first electrode plate and the second electrode plate.

2. The high-temperature molten-salt viscosity measurement device according to claim 1, further comprising a thermal insulation component, wherein the thermal insulation component surrounds the outer side wall surface of the container.

3. The high-temperature molten-salt viscosity measurement device according to claim 2, further comprising an upper cover, wherein the container has a liquid injection port, and the upper cover is configured to cover and close the liquid injection port.

4. The high-temperature molten-salt viscosity measurement device according to any one of claims 1 to 3, further comprising a temperature sensing component, wherein the temperature sensing component abuts against the outer side wall surface of the container, and is configured to measure the temperature of the container.

5. The high-temperature molten-salt viscosity measurement device according to claim 1, further comprising a first lifting arm and a second lifting arm, wherein the first lifting arm is connected to the first electrode plate, the second lifting arm is connected to the second electrode plate, and the first lifting arm and the second lifting arm respectively drive the first electrode plate and the second electrode plate to move in an axial direction of the container.

6. The high-temperature molten-salt viscosity measurement device according to claim 1, wherein the rotating assembly comprises a rotating motor and a clamp, the clamp is fixedly connected to the rotating motor, the container is clamped in the clamp, and the rotating motor is configured to drive the clamp to rotate, so that the clamp drives the container to rotate about the axis.

7. The high-temperature molten-salt viscosity measurement device according to claim 1, wherein the container is in a cylindrical shape, and is made of a high-temperature resistant thermally conductive material.

8. The high-temperature molten-salt viscosity measurement device according to claim 1, wherein the heating element is a heating wire, and the heating wire is wound around the outer side wall surface of the container around the axis of the container.

9. A high-temperature molten-salt viscosity measurement method, performed with the high-temperature molten-salt viscosity measurement device according to any one of claims 1 to 8 for measurement, comprising the following steps:
S1: adding a preset volume of molten salt into the container;
S2: adjusting positions of the first electrode plate and the second electrode plate in the axial direction of the container, so that lower edges of the first electrode plate and the second electrode plate are both flush with a liquid level of the molten salt;
S3: activating the heating element to heat the container to a preset temperature;
S4: connecting the first electrode plate and the second electrode plate, and recording an initial electric current value;
S5: activating the rotating assembly to allow the rotating assembly to rotate in a preset rotational angular velocity; and
S6: recording a time interval required for the electric current to change from the initial value to a stable value after a magnitude of the electric current in a circuit between the first electrode plate and the second electrode plate stabilizes.

10. The high-temperature molten-salt viscosity measurement method according to claim 9, wherein after step S6, the method further comprises a step of adding a preset volume of a standard fluid having a known viscosity and a known density into the container, and performing step S2 to step S6.
